(19)

Europäisches Patentamt
European Patent Office
Office européen des brevets

(11) **EP 2 710 420 B1**

(12) **EUROPEAN PATENT SPECIFICATION**

(45) Date of publication and mention
of the grant of the patent:
**03.10.2018 Bulletin 2018/40**

(21) Application number: **12725864.8**

(22) Date of filing: **21.05.2012**

(51) Int Cl.:
*G02B 6/32* (2006.01)     *G02B 6/42* (2006.01)
*B23K 26/06* (2014.01)

(86) International application number:
**PCT/GB2012/000451**

(87) International publication number:
**WO 2012/156678 (22.11.2012 Gazette 2012/47)**

(54) **APPARATUS AND METHOD FOR OPTICALLY ISOLATING A LIGHT BEAM FROM A LASER**

VORRICHTUNG UND VERFAHREN ZUR OPTISCHEN ISOLIERUNG EINES LASERLICHTBÜNDELS

DISPOSITIF ET PROCÉDÉ POUR L'ISOLATION OPTIQUE D'UN FAISCEAU DE LUMIÈRE À LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2011 GB 201108470**

(43) Date of publication of application:
**26.03.2014 Bulletin 2014/13**

(73) Proprietor: **SPI Lasers UK Limited
Southampton, Hampshire SO30 2QU (GB)**

(72) Inventors:
• **DURKIN, Michael Kevan
Southampton
Hampshire SO18 1GF (GB)**
• **INGRAM, Stewart Thomas
Salisbury
Wiltshire SP1 3RX (GB)**

(74) Representative: **Jones, Graham Henry
Graham Jones & Company
77 Beaconsfield Road
Blackheath, London SE3 7LG (GB)**

(56) References cited:
**US-A1- 2005 105 870**

EP 2 710 420 B1

**Description**

**Field of Invention**

This invention relates to an apparatus and method for optically isolating a light beam from a laser.

**Background to the Invention**

There are many applications for lasers that require the output beam of a laser to be optically isolated to prevent back reflections damaging the laser or causing undesirable optical interactions. Examples include welding, cutting, drilling, cladding, brazing, marking, engraving, and slicing materials, especially highly reflective materials such as copper, brass, gold, silver and diamonds. The optical isolation is typically performed using an optical isolator through which the output beam of the laser is coupled. Back reflected light is then prevented from returning to the laser by the optical isolator.
For low power laser systems, it is usually satisfactory to collimate the laser light beam through the optical isolator. The light beam is then expanded by a beam expanding telescope, and then coupled into a mechanical scanning optics which directs the beam to the material to be processed.
Mechanical scanning optics come in standard formats each of which is optimized for receiving a collimated light beam of a specific beam diameter. Beam diameters ($1/e^2$) of 5mm, 7.5mm and 10mm are very common choices. The laser manufacturer thus needs to provide beam expanding telescopes that output collimated light beams that have these beam diameters.
As the average power of the laser system increases above approximately 1W, the size of the optical isolator generally increases because of the need to avoid laser induced damage at optical surfaces of the crystals within the isolator. If size, cost of an individual isolator, and isolation performance are not critical, then the light beam can still be collimated through the optical isolator, and expanded with a beam expanding telescope.
However, if cost is an issue (for example in lasers manufactured in high volumes for consumer electronics and marking applications), then isolator crystal size must be kept to a minimum. This leads to a requirement to focus the light beam through the optical isolator in order to optimize the isolation performance. The light beam emerging from the optical isolator is therefore not collimated. A conventional approach would be to provide a collimating lens to collimate the light from the optical isolator to a standard beam diameter which is compatible with standard beam expanding telescopes. A benefit of this approach is that it reduces design effort because standard optics can be used.
The situation becomes more complicated when the same optical isolator is being used with a family of high power lasers, where each laser type within the family has a different beam quality. This is because the optimization of the beam profile through the optical isolator is usually different for each laser, and in addition, different collimating lenses must be selected to collimate the output light to be compatible with the standard beam expanding telescopes.
Beam quality is usually defined in terms of $M^2$ or the beam parameter product. The $M^2$ of a light beam defines how rapidly the beam diverges from a given aperture compared to a Gaussian beam having an $M^2$ of 1 from the same aperture: an $M^2$ of 2 means that the beam diverges twice as fast, and an $M^2$ of 3 means that the beam diverges three times as fast. The beam parameter product (BPP) is related to the $M^2$ by the equation:

$$BPP = M^2 . \lambda / \pi \quad (mm.mrad) \tag{1}$$

where the wavelength $\lambda$ is given in micrometers $\mu$m. Thus a ytterbium-doped fibre laser emitting at 1.06$\mu$m and with an $M^2 = 1.0$ would have a BPP = 0.338 mm.mrad. If the laser had an $M^2 = 2$, then the BPP = 0.672 mm.mrad, and if the laser had an $M^2 = 3$, then the BPP = 1.01 mm.mrad.
If a product family of lasers were designed comprising three lasers having $M^2 = 1$, $M^2 = 2$, and $M^2 = 3$, then the difference in the beam quality (and hence beam divergence) would result in three different beam optimizations being required at the input to the respective optical isolator. Three different collimator designs, one for each of the lasers, are required to match the output beams to the beam expanding telescopes.
However, this conventional approach is not a satisfactory option when commercial requirements require products to be produced at the lowest possible cost. This is because the collimator at the output of the isolator is serving a similar purpose as the first lens in the beam expanding telescope. There is therefore a redundant optical element within the system. Although this is acceptable for systems produced in low quantities where the additional expense of designing special optics is more than the cost of using standard beam expanding telescopes, it is not an acceptable commercial solution for high volume product production where cost and space of the product is at a premium.
There is therefore a need for an optical isolator design that removes the additional collimator at the output of the isolator. Unfortunately, removal of this additional collimator causes a major design problem for a product family of lasers defined by different beam qualities. In the example quoted above, there would need to be three different beam expanding telescopes for each of the three lasers. These three different beam expanding telescopes would not be interchangeable between the lasers without additional functionality being provided, for example in the form of additional lenses or adjustability. Thus it would be necessary to provide nine different beam expanding telescopes in order to match the three beams to the three mechanical scanner units. The complication described above increases rapidly with the number of different laser beam qualities and the number of mechanical scanner units being catered for. It is for this reason that prior art laser systems for high volume requirements are provided with a range of beam adaption accessories, which need to be designed and manufactured for use in customer applications. In addition, customers may need assistance in selection of such beam adaption accessories for their particular applications.

It would be advantageous if there were optical isolators and laser systems that enable greater commonality of laser accessories between different laser types. Such an advance would lead to fewer accessories needing to be designed, manufactured and controlled by the laser manufacturer.

Pulsed laser systems, especially fibre lasers in a master oscillator power amplifier (MOPA) configuration, or a pulsed-mode fibre laser cavity with a low quality factor (Q), require high levels of energy storage and population inversion in the active medium in order to achieve output pulses that are sufficiently energetic and intense for useful application, such as material processing. As gain in the active medium increases, the pulsed laser system can become very sensitive to back-reflections (e.g. from a reflective material to be processed) that can result in perturbation of emitted pulses or, in some cases, damage to the laser system.

Typical materials processing systems use a galvanometer scanner and a focusing lens to manipulate the location of the laser beam on a workpiece. Typical beam sizes in the range 5 - 10mm are required at the input to such galvanometer scanners in order to generate laser beam spot sizes at the workpiece with sufficient intensity for optically processing materials (say, 10 - 100$\mu$m). It is usually impractical in terms of size and cost to utilise an isolator with the clear optical aperture required to directly pass the required 5 - 10mm collimated laser beam diameter. Therefore, it is usual to isolate a smaller diameter collimated laser beam, and then to expand the beam diameter of the laser beam prior to the scanner system, using a beam expanding telescope arrangement.

The conventional method for expanding laser beams such that they are compatible with the most common scanner applications is to use a two-lens Galilean type beam expanding telescope where a collimated input beam is required and is expanded according to:

$$\text{Magnification} = f_2 \, / \, f_1 \tag{2}$$

and

$$\text{Optimal lens separation} = f_1 + f_2 \tag{3}$$

where $f_1$ and $f_2$ are the focal lengths of two lenses. A typical 1 $\mu$m infra-red laser system whose output beam is well-collimated will have a beam diameter greater than approximately 1mm such that free-space diffraction according to the physical laws of free-space beam propagation is negligible. Such a beam can then be manipulated with a Galilean type beam expanding telescope in order to achieve the typical beam diameter requirements of 5 - 10mm at the optical input of a materials processing system.

However, even this approach requires an optical isolator that can accept a 1 mm diameter collimated laser beam. Such an isolator requires relatively large, expensive, isolator crystals, magnets and overall package size. This is particularly the case for 1 $\mu$m lasers where terbium gallium garnet (TGG) is the de facto Faraday rotator. TGG offers low absorption at the laser wavelength and high damage thresholds, but it is an expensive crystal. TGG also has a low Verdet constant and therefore high magnetic fields are required to achieve the required Faraday rotation.

For high volume applications where component cost and size are critical, there is a need to further optimise isolator design, not only for optical performance, but also to reduce cost by reducing the TGG crystal size and the magnet volume. In order to achieve this, it becomes necessary to use an optical isolator with an aperture size much less than 1mm diameter. This reduced optical aperture size necessitates that the laser beam diameter be reduced to much less than 1mm, and in certain cases be focussed to a beam waist within the isolator. The consequence is that it is no longer possible to collimate the laser beam through the isolator, and the laser beam will be divergent after the isolator by an amount that is dependent upon the beam quality ($M^2$) of the particular light beam being used.

For an isolator design where the diameter of the light beam is small (less than approximately 1mm) and no longer collimated, the input divergence to the beam expanding telescope can become substantial and as it becomes so, the lens separation required to achieve optimal collimation changes. Expander magnification is now given by

$$\text{Magnification} = f_2 / f_1 + dZ / ( f_1 + f_2 ) \qquad\qquad (4)$$

where dZ is the change in lens separation required to achieve optimum collimation. Thus the beam expanding telescope behaves less like the Galilean beam expanding telescope described by equations (2) and (3) and in conventional catalogue descriptions. In addition to this, smaller beams at the input to the beam expanding telescope would require higher magnification in order to achieve a given output beam diameter. This would result in an increase in size or optical complexity.

For a given isolator design, laser wavelength, and input beam diameter, the divergence of the laser beam after the isolator and at the input to the beam expanding telescope will increase by $M^2$, the beam quality of the laser beam. This factor is much less pronounced in non-optimized isolator systems using conventional collimated (>1mm beams) where free-space diffraction of the beam is minimal.

For pulsed fibre lasers, the laser beam quality ($M^2$) is typically affected by the optical fibre that transports the laser light from the fibre laser to the optical isolator. Moreover, the last optical fibre before the optical isolator often defines the beam quality ($M^2$) that is achieved. Additionally, for reasons of size, cost and stability, the last fibre (or input fibre to the isolator) is typically permanently attached to the isolator device for subsequent fusion splicing to the fibre laser.

These factors mean that a cost and size optimised isolator design creates significant complexity in the design, complexity, and required variety of subsequent beam conditioning optics because of the requirement for using small, non-collimated, or even focused laser beams.

An approach to beam conditioning the divergent beam after the isolator would be to collimate the beam at the isolator exit such that conventional beam expanding telescopes may be used. This would result in an additional optical element before a standard telescope, different for each $M^2$. This adds expense, complexity and optical losses. Additionally, since a well-collimated beam at a wavelength of approximately 1 $\mu$m must have a beam diameter greater than approximately 1mm, the additional optical element must be located to satisfy the condition that the product of its distance (in mm) from the beam waist and the full angle far-field divergence of the beam (in radians) is greater than approximately 1 mm. For lasers with high beam quality ($M^2 < 1.3$), this can lead to undesirably long devices (typically greater than 130mm, which is in addition to the length of the isolator.

An alternative approach would be to design bespoke optics for expanding and collimating the beam for each $M^2$ type and for each scanner application.

These approaches are sub-optimal in terms of features such as: the number of optical elements in the beam path; cost; size; optical losses; proliferation of different beam conditioning units to account for lasers of differing beam quality; simplicity of installation and operation for the system integrator; interchangeability of optics and laser systems.

United States patent application publication US 2005/0105870 A1 describes a laser transmitter unit including a laser diode emitting laser radiation into a lens system. The lens system includes collimating lenses and focusing lenses. The collimating lenses act to collimate the optical radiation emitted by the laser diode. The position of the collimating lens is adjusted so as to produce the required collimation of the beam and is welded into position. The collimating lens transmits the optical radiation to an isolator that outputs optical radiation onto the lens that acts to focus the radiation onto a modulator. Additionally, compensating or steering lenses are positioned between the collimating lenses and the focusing lenses. The steering lenses act to reduce the sensitivity of the focusing lenses to position within the lens system. The steering lenses are adjusted to correct positional errors caused by post weld drift of the focusing lens by restoring the X and Y positions of the focal point at the modulator after the focusing lenses have been welded. In the example given, the collimating lens has an effective focal length of 0.78mm, a working distance of 0.15mm, a clear aperture of 1.3mm and a numerical, aperture of 0.83.

An aim of the present invention is to provide an apparatus and method for optical isolation which reduces the above aforementioned problem.

**The Invention:**

The invention is defined by appended independent claims 1 and 9.

According to a non-limiting embodiment of the present invention, there is provided an apparatus for optically isolating a light beam from a laser, which light beam is characterized by an average power greater than 1 W and a pre-determined beam quality defined by an $M^2$ value between 1 and 25, and which apparatus comprises an optical input for the light beam, an input lens, an optical isolator, an output connector, a reference plane, and a first lens arrangement, wherein: the optical isolator is selected to isolate the light beam; the input lens is positioned between the optical input and the optical isolator, and is arranged to focus the light beam through the optical isolator to the output connector such that a beam diameter of the light beam varies by more than five percent within the optical isolator; the first lens arrangement is positioned to receive the light beam from the optical isolator; the optical isolator is a polarization insensitive isolator;

the light beam is not collimated in the optical isolator; the input lens is selected based upon the pre-determined beam quality; the input lens is configure to focus the light beam to a light beam diameter within the optical isolator of less than 0.5mm; the output connector is formed with a connector interface to connect to a collimator which is capable of being referenced to the reference plane; the first lens arrangement is selected based upon the pre-determined beam quality of the light beam to provide an output light beam having a pre-determined divergence that is independent of the beam quality; the first lens arrangement is positioned to form a beam waist at a pre-determined distance from the reference plane; and the connector interface, the pre-determined divergence that is independent of the beam quality, and the pre-determined distance allow a family of collimators to be used in the apparatus, each collimator providing a different pre-determined beam diameter that is independent of the beam quality when the collimator is fitted to the output connector.

The apparatus of the present invention enables a radical simplification of the collimation accessories required for typical laser families. For example, a typical known commercial laser family may be three fibre lasers, each defined by different beam qualities. For a given optical isolator design, the input beam to the isolator has to be tailored according to the beam quality of each fibre laser such that the beam path through the isolator is optimized. The beam then needs to be expanded by a beam expanding telescope in order to be compatible with industry standard optical scanning optics. Typical beam diameters are 5mm, 7.5mm and 10mm. Consequently, different beam expanding telescope designs are required, each dependent upon the beam quality of the fibre laser and the required beam diameter of the final collimated beam. In the example given, up to nine different beam expanding telescope designs may be required. Alternatively, adjustment may be added into the beam expanding telescopes in order to account for the different beam qualities.

The apparatus of the present invention removes this complexity by only requiring up to three designs of the first lens arrangement to provide the beam having the pre-determined divergence from the beam waist, and three designs of the collimators that comprise the second lens arrangement to provide the 5mm, 7.5mm and 10mm collimated beams. Moreover, the 10mm collimator can be interchanged from a fibre laser having one beam quality, and used on a fibre laser having a different beam quality to provide an output beam having the same 10mm collimated beam diameter.

The cost benefits of the invention are considerable. They include: (i) the ability to use smaller isolators that are lower cost as a result of using smaller internal crystals compared to larger isolators; (ii) less accessories (such as collimators and beam expanding telescopes) required because of the provision of the output beam having the pre-determined divergence; and (iii) the ability to integrate the collimator with laser processing apparatus and have detachable and interchangeable lasers.

The apparatus of the present invention may be one whereby:

- The optical isolator design is cost / size optimised such that the light beam through the isolator is small, non-collimated, or even focused, in order to minimise crystal size and magnet size.
- A negative element is introduced at the output of the optical isolator housing in order to make the output of the device highly divergent
- The prescription of the negative element is selected according to the beam quality $M^2$ of the input light beam such that the output divergence is substantially normalised with respect to $M^2$
- The source of this divergence ("virtual waist") is located at a well-defined position in space.
- The light beam is collimated to the required size by a collimation lens group, which is held in a mechanical carrier designed to precisely interface to the optical isolator system in a way that accurately locates the collimation lens group with respect to the virtual waist and optical axis of the optical isolator.

This enables:

- The need for only one collimating lens type, compatible with all beam quality $M^2$ types, per scanner application (beam diameter) because the output of the optical isolator has a well defined output divergence and the beam waist has a well defined position
- "Plug and play" tolerances of collimation and beam positioning with respect to the reference plane.
- Interchangeability of lasers with different beam qualities ($M^2$) with the same collimator/ scanner systems.
- Compact beam expansion because of the high divergence from the negative optical lens.
- Minimal optical losses resulting from beam expansion.
- Rapid and relatively low-cost prototyping of new collimator requirements.
- Rapid and straightforward introduction of laser sources with different beam qualities into an existing product range of lasers and collimators.

The first lens arrangement may be a negative lens. This is particularly advantageous for lasers in which the peak power of the laser output is greater than 1kW because it avoids problems associated with ionization of the air that may occur with a real focus.

The beam waist may be a virtual beam waist.

The first lens arrangement may be concentric with the light beam.

The first lens arrangement may be defined by a focal length, and the beam waist may be separated from the first lens arrangement by a distance equal to the focal length.

The apparatus may include the collimator.

The collimator may comprise a second lens arrangement for converting the light beam having the pre-determined divergence to a collimated beam having a pre-determined beam diameter, the apparatus being such that when the collimator is attached to the output connector and mechanically referenced to the reference plane, the pre-determined beam diameter is independent of the beam quality of the light beam.

The second lens arrangement may be a single positive lens, or a multi-element lens arrangement. The second lens arrangement may be a cemented doublet, or a cemented triplet. The second lens arrangement is preferably an air-spaced doublet or an air-spaced triplet.

The apparatus may include the laser and an optical fibre cable. The laser may be connected to the optical input via the optical fibre cable. The laser may be characterized by a peak power intensity greater than 1kW.

The laser may be selected from the group comprising a fibre laser, a disk laser, and a rod laser.

The pre-determined divergence may be between 50 mrad and 200 mrad, in particular between 90 mrad and 125 mrad.

The first lens arrangement may be separated from the optical isolator by a distance of at least 20mm.

According to a non-limiting embodiment of the invention there is also provided a method for optically isolating a light beam from a laser, which method comprises: providing an optical input for the light beam; selecting an optical isolator to isolate the light beam, which light beam is characterized by an average power greater than approximately 1 W and a pre-determined beam quality defined by an $M^2$ value; providing an input lens ; providing an output connector; using the input lens to focus the light beam through the optical isolator to the output connector; ; and positioning a lens arrangement to receive the light beam from the optical isolator; the $M^2$ value is between 1 and 25; the optical isolator is a polarization insensitive isolator; the light beam is not collimated in the optical isolator; the input lens is selected based upon the pre-determined beam quality; the step of focussing the light beam with the input lens provides a light beam diameter within the optical isolator of less than 0.5mm; the first lens arrangement is selected based upon the pre-determined beam quality of the light beam to provide an output light beam having a pre-determined divergence that is independent of the beam quality; the first lens arrangement is positioned to form a beam waist at a pre-determined distance from the reference plane; and the connector interface, the pre-determined divergence that is independent of the beam quality, and the pre-determined distance allow a family of collimators to be used in the method, each collimator providing a different pre-determined beam diameter that is independent of the beam quality when the collimator is fitted to the output connector.

The method may be such that the lens arrangement is a negative lens.

The method may include the steps of providing the laser and an optical fibre cable, and connecting the laser to the optical input with the optical fibre cable.

The method may include the step of providing the collimator.

The laser may be selected to have a peak power intensity greater than 1kW. The laser may be selected from the group comprising a fibre laser, a disk laser, and a rod laser.

The apparatus of the invention may comprise a plurality of the optical isolators, each configured to isolate a light beam having a different beam quality to the other light beams; a plurality of the output connectors each connected to a different one of the optical isolators; a plurality of the reference planes, each associated with a different one of the optical isolators; and a plurality of the first lens arrangements, each located proximal to a distal end of a different one of the optical connectors; wherein: the first lens arrangements are each selected to provide an output light beam having the same pre-determined divergence; the first lens arrangements are each positioned to provide a beam waist at the pre-determined distance from their respective reference plane; whereby the collimator is able to be connected to any one of the output connectors to provide the same pre-determined beam diameter.

The first lens arrangements may each be positioned to provide the beam waist at the same pre-determined distance from their respective reference plane.

The apparatus of the invention may include a collimator having a different second lens arrangement connected to any one of the output connectors to provide a different pre-determined beam diameter.

The apparatus of the invention may comprise a plurality of lasers each connected to the optical input of a different one of the isolators. The lasers may each be defined by a different beam quality.

In one aspect, the apparatus of the invention may be a plurality of lasers, which plurality of lasers comprises lasers having different beam qualities, configured to emit laser radiation with a pre-determined beam divergence such that interchangeable collimators can be fitted to the lasers in order to provide pre-determined beam diameters. The plurality of lasers may be such that each laser is configured to emit laser radiation defined by a different beam quality, wherein each laser comprises an optical isolator, an output connector, a reference plane, and a first lens arrangement, wherein for each laser: the laser is selected from the group comprising a fibre laser, a disk laser and a rod laser; the optical isolator is configured to isolate the laser radiation; the output connector is located at the output of the optical isolator; the first lens arrangement is located proximal to a distal end of the output connector; the output connector is configured to connect to a collimator; the collimator is such that it can be mechanically referenced to the reference plane. Each laser may be characterized in that: the first lens arrangement is selected to provide an output light beam having a pre-determined divergence; the first lens arrangement is positioned to provide the beam waist at the pre-determined distance from the reference plane; wherein the pre-determined divergence is the same for each of the lasers.

The first lens arrangement may comprise a negative lens.

The beam waist may be a virtual beam waist.

The collimator may comprise a second lens arrangement for converting the light beam having the pre-determined divergence to a collimated beam having a pre-determined beam diameter, and the pre-determined beam diameter may be the same for each of the lasers when the light beam is collimated by the same collimator.

The plurality of lasers may comprise a plurality of the collimators, wherein each collimator is characterised by a different distance between the second lens arrangement and the beam waist when connected to the output connector of one of the lasers, and wherein each of the collimators emits a collimated beam having different pre-determined beam diameters.

The pre-determined divergence may be between 50 mrad and 200 mrad. The pre-determined divergence may be between approximately 90 mrad and 125 mrad.

The first lens arrangement may be separated from the isolator by a distance of at least 20mm.

In one aspect, the present invention further provides a method of using plug and play components such that input light beams that have a plurality of distinct beam qualities ($M^2$) can be used to provide, to a collimator, a light beam that has the same pre-determined divergence and the same predetermined distance from a reference plane so that the same collimator can provide a collimated beam with substantially the same collimated beam diameter using lasers that input light beams that have a plurality of different beam qualities provide. This method of the present invention may be used with lasers that include an optical isolator, an output connector, a reference plane and a first lens arrangement. One end of the output connector component is located at the output of the optical isolator and may be releasably secured thereto as a separate component or formed as an integral part of the optical isolator. The first lens arrangement is located within the output connector at the opposite end of the output connector. The output connector includes a mechanical interface for connection to a collimator such that the collimator can be referenced to the reference plane. The first lens arrangement within any particular output connector component is selected form a plurality of optically different lens arrangements so that there are output connector components that have different lens arrangements, but each have an identical mechanical interface. Because the different output connectors have a common mechanical interface they may each be connected to a collimator that has a compatible interface. Thus, a particular lens arrangement may be selected and used as desired.

According to one aspect of the present invention, the method of using plug and play components such that input light beams that have a plurality of different beam qualities ($M^2$) can be used to provide, to a collimator, a light beam that has the same pre-determined divergence and the same predetermined distance from a reference plane comprises the steps of: determining the beam quality $M^2$ of an input light beam; determining the position and a beam waist diameter of the light beam; selecting a lens arrangement from among the plurality of optically different lens arrangements based upon on the $M^2$ of the light beam, the beam waist diameter, and the position of the beam waist, such that the output light beam has a predetermined divergence and the output light beam appears to emerge from an aperture at a predetermined distance from the reference plane; providing the selected lens arrangement in an output connector at the output of an optical isolator.

The apparatus of the present invention may be used to enable plug and play compatibility in that a different apparatus characterized by light beam having a different $M^2$, but having an output connector with the same mechanical interface, and a lens selected and positioned to provide the same predetermined divergence and the same predetermined distance can be connected into the same collimator to provide a collimated beam with substantially the same collimated beam diameter. The beam waist and the lens are preferably aligned with respect to the mechanical interface to enable the plug and play compatibility.

## Brief Description of the Drawings

Embodiments of the invention will now be described solely by way of example and with reference to the accompanying drawings in which:

Figure 1 shows apparatus according to the present invention for optically isolating a light beam from a laser;
Figure 2 shows a negative lens;
Figure 3 shows a positive lens;
Figure 4 shows apparatus comprising two lasers having different beam qualities, each connected to an isolator which emits a light beam having the same pre-determined beam divergence, and connected to the same collimator design which emits a collimated light beam having the same diameter;

Figure 5 shows apparatus comprising four lasers, each having different beam qualities, each connected to an isolator which emits a light beam having the same pre-determined beam divergence, and connected to different collimator designs which emit a collimated light beam having different diameters; and

Figure 6 shows laser processing apparatus comprising a collimator and interchangeable lasers.

## Preferred Embodiment

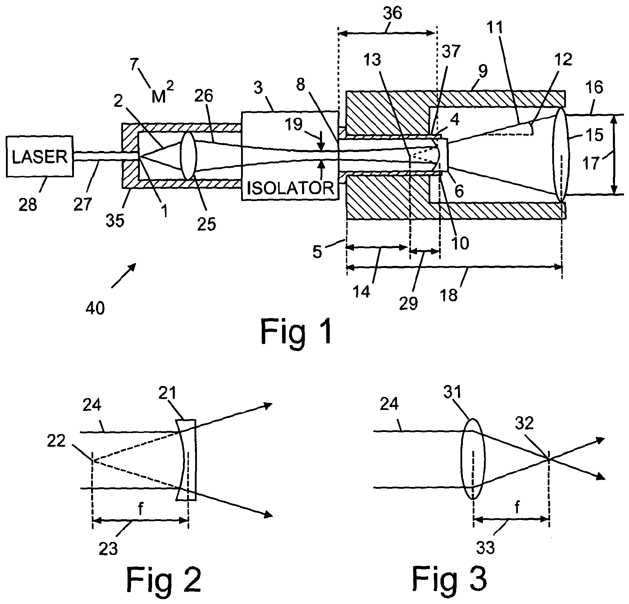

Figure 1 shows apparatus for optically isolating a light beam from a laser, which apparatus comprises an optical input 1 for the light beam 2, an input lens 25, an optical isolator 3, an output connector 4, and a first lens arrangement 6. The optical isolator 3 is selected to isolate a light beam 2 having an average power greater than approximately 1 W, which light beam 2 is characterized by a pre-determined beam quality 7 defined by an $M^2$ value. The input lens 25 is positioned before the isolator 3, is selected based upon the pre-determined beam quality 7, and focuses the light beam 2 through the isolator 3 such that a beam diameter 19 of the light beam 2 varies by more than five percent within the optical isolator 3. The output connector 4 is located at the output 8 of the optical isolator 3. The output connector 4 comprises a surface forming a reference plane 5. The first lens arrangement 6 is positioned to receive the light beam 2 from the isolator 3.

The apparatus is characterised in that the output connector 4 is formed with a connector interface 37 which is able to connect to any one of a plurality of collimators 9 with each collimator 9 being able to be referenced to the reference plane 5 and with each collimator 9 being of a different design for outputting a collimated beam 16 of different collimated beam diameters 17. The first lens arrangement 6 is selected based upon the pre-determined beam quality 7 of the light beam 2 to provide an output light beam 11 having a pre-determined divergence 12. The first lens arrangement 6 is positioned to form a beam waist 13 at a pre-determined distance 14 from the reference plane 5. The connector interface 37, the pre-determined divergence 12, and the pre-determined distance 14 comprise a common collimator interface, allowing the plurality of collimators 9 to be individually connected to the output connector 4 to provide the collimated beam 16 having the collimated beam diameter 17 that is independent of the beam quality 7 of the light beam 2.

There are several suitable mechanical connector interfaces 37 that can be provided for the output connector 4 that provide the necessary mechanical tolerances for plug and play connectivity. By plug and play, it is meant that different laser systems can be connected to different collimators 9, and different collimators 9 can be connected to the same laser systems without requiring additional alignment before operation. An example of a preferred mechanical interface 37 is the mechanical interface on the TRUMPF LLK-B optical fibre connector as implemented in fibre cables provided by Optoskand AB of Mölndal, Sweden. Although a connector 4 in the form of a highly precision machined plug is preferred, other connector interfaces 37 are possible. For example, a highly precision machined socket for interfacing to a collimator 9 in the form of a plug. Alternatively, a connector interface 37 in the form of a machined plate or a kinematic mount could be provided.

The apparatus of the invention may optionally include a mechanical alignment mechanism (not shown) on at least one of the fibre cable 27, the input lens 25, the first lens arrangement 6, the output connector 4, and the collimator 9 in order to align the light beam 2 to the collimator 9.

The output connector 4 may form an integral part of the optical isolator 3. Alternatively, or additionally, the output connector 4 can be releasable from the optical isolator 3.

An adaptor (not shown) can be provided for interfacing the output connector 4 with the collimator 9.

The output connector 4 can be fitted with electrical contacts (not shown). This can be used in a safety system (not shown) that provides a warning signal if the output connector 4 is not in contact with the collimator 9.

The first lens arrangement 6 may be positioned at the distal end 10 of the output connector 4.

The collimator 9 comprises a second lens arrangement 15 for converting the output light beam 11 having the pre-determined divergence 12 to the collimated beam 16 having the pre-determined beam diameter 17. When the collimator 9 is attached to the output connector 4 and mechanically referenced to the reference plane 5, the pre-determined beam diameter 17 is independent of the beam quality 7 of the light beam 2. This is because the variation in output divergence 12 with beam quality 7 has been compensated by the selection of the first lens arrangement 6.

Tolerancing between the collimator 9 and the output connector 4 should be such as to provide beam stability and to minimize thermal effects due to temperature changes. Coned and tapered mating surfaces (not shown) on the collimator 9 and the output connector 4 may be employed to assist in location accuracy and wear resistance.

Different beam diameters 17 can be achieved by changing the distance 18 between the reference plane 5 and the second lens arrangement 15. This can be achieved with collimators having different focal lengths, adding length adjustment for example with a screw thread or mechanical inserts, having different location points for the second lens arrangement 15, changing the position of the reference plane 5, or a combination of the above.

The first lens arrangement 6 is preferably concentric with the light beam 2.

The first lens arrangement 6 can optionally comprise a negative lens 21 as shown with reference to Figure 2. Parallel light rays 24 form a virtual focal point 22 at a focal distance f 23 from the lens 21.

The first lens arrangement 6 can optionally comprise a positive lens 31 as shown with reference to Figure 3. Parallel light rays 24 form a real focal point 32 at a focal distance f 33 from the lens 31.

Referring again to Figure 1, the illustrated apparatus is particularly useful for high power lasers that have average powers greater than 1W, or preferably greater than 10W. These require specialist optical isolators 3 that are capable of high power operation. The optical isolator 3 may be model number PI-9.0-YB-300 supplied by Electro-Optics Technologies, Inc. of Traverse City, Michigan, United States of America which may be adapted for use in the present invention. The isolator 3 may be a wedge based isolator or a displacement isolator. The isolator 3 is a polarization insensitive isolator. In a comparative example, the isolator 3 may be an isolator configured to isolate a polarized light beam.

Referring to Figure 1, the first lens arrangement 6 is shown as being a negative lens with the beam waist 13 separated from the first lens arrangement 6 by a distance 29 which is approximately equal to the focal length 23 shown with reference to Figure 2. The beam waist 13 is a virtual beam waist, which is particularly advantageous for use with lasers in which the peak power of the laser output is greater than 1kW because it avoids problems associated with ionization of the air which can occur with a real beam waist obtained with a positive lens such as the lens 31 shown in Figure 3.

The second lens arrangement 15 is shown a being a single positive lens. Alternatively, combinations of lenses can be used. Preferably the second lens arrangement 15 is an air-spaced doublet.

Figure 1 also shows a laser 28 connected to the optical isolator 3 via the optical input 1. The laser 28 is shown as being connected with an optical fibre cable 27 from which the light beam 2 diverges. The input lens 25 is provided in order to focus or collimate a light beam 26 through the isolator 3. The input lens 25 is held in a housing 35.

The laser 28 can be selected from the group comprising a fibre laser, a disk laser, a rod laser, or a gas laser.

The laser 28 may be a ytterbium pulsed fibre laser such an SP-20P pulsed fibre laser manufactured by SPI Lasers UK Limited of Southampton, England. These lasers have peak power intensities greater than 1kW and are characterized by different average power outputs and by different beam qualities. Three basic types are provided, having beam qualities given by $M^2$ = 1, 2 and 3. The divergence of the output beams 2 of these lasers are very different from each other, and this requires the input lens 25 to be optimized for each laser 28 in order to optimize the path through the isolator 3 and hence the degree of optical isolation provided by the isolator 3. Once the input lens 25 is optimized, the first lens arrangement 6 can be selected and positioned in order to provide the pre-determined divergence 12 and the beam waist 13.

The input lens 25 controls the diameter 19 of the light beam 26 as it propagates through the optical isolator 3. A small diameter 19 of the light beam 26 within the optical isolator 3 is optimal for cost reasons since this reduces the cost of crystals used in the optical isolator 3. However if the beam diameter 19 is too small, material damage thresholds in the crystals may be exceeded. This material damage would usually occur on the surfaces of the crystals. The optimization of the input lens 25 thus needs to be a trade off for these two competing requirements. Different optimization is required for different beam qualities 7. Different optimization may also be required for different fibre cables 27.

The cost benefits of the invention increase as the size of the optical isolator 3 reduces. Smaller isolators 3 require smaller beam diameters 19 which lead to increased variation in the design of the input lens 25 and the first lens arrangement 6 as the beam quality 7 of the light beam 2 is altered by, for example, using a different laser 28 or a different fibre cable 27. In a comparative example, the beam diameter 19 is preferably less than 1 mm, in the preferred embodiment, it is less than 0.5mm. The apparatus of the invention is particularly advantageous when the far field full-angle beam divergence (not shown) of the light beam 26 from the isolator 3 is more than 2 mrad. This is because at this angle, variations in the first lens arrangement 6 become appreciable with variations in beam quality 7.

The invention enables a family of optical isolators 3 to be designed, each configured to isolate a light beam 2 with a different beam quality 7. Different designs of the optical isolator 3 require differences in the design and configuration of the input lens 25 in order to optimize the optical isolation of the optical isolator 3. The design and configuration of the first lens arrangement 6 is designed and configured to provide the same pre-determined divergence 12 for each combination of the input lens 25 and optical isolator 3 design. Preferably the optical isolators 3 are fibre coupled at their input using the fibre cable 27 providing convenient coupling means to lasers 28 and in particular to fibre lasers.

The invention also enables a family of collimators 9 to be produced that are compatible with each of the optical isolators 3. Each collimator 9, by virtue of the pre-determined divergence 12 of the output beam 11 and the position of the beam waist 13, provides the same pre-determined beam diameter 17 with each of the isolators 3. When fitted to the isolators 3, each collimator 9 has different distance between the second lens arrangement 15 and the reference plane 5, and thus provides different output beam diameters 17 to that obtained with the other collimators 9. The optical isolators 3 can each be fitted to different lasers 28 having different beam qualities 7. Since the beam quality of the laser 28 can be degraded by the optical fibre cable 27, the beam quality 7 that is required to be compensated for by the first lens arrangement 6 is the beam quality 7 of the input light beam 2 at the optical input 1.

The above mentioned components of Figure 1 may form a laser system configured to emit a light beam 11 defined by the same pre-determined divergence 12. Collimators 9 can be attached to the laser system to provide the output beam 16 having the predetermined beam diameter 17. Advantageously the beam diameter 17 may be selected to be compatible with optical scanners, and in particular industry standard optical scanners specified for input beams having 5mm, 7.5mm and 10mm input beam diameters.

The optical isolators 3 may be manufactured and sold with or without the collimator 9. The optical isolators 3 are preferably fibre coupled with the fibre cable 27.

The laser system that comprises the optical isolator 3 may be manufactured and sold with or without the collimator 9.

The invention enables the collimators 9 to be interchangeable with the laser system, with the output beam diameter being set by the collimators 9 irrespective of the beam quality 7 of the laser system.

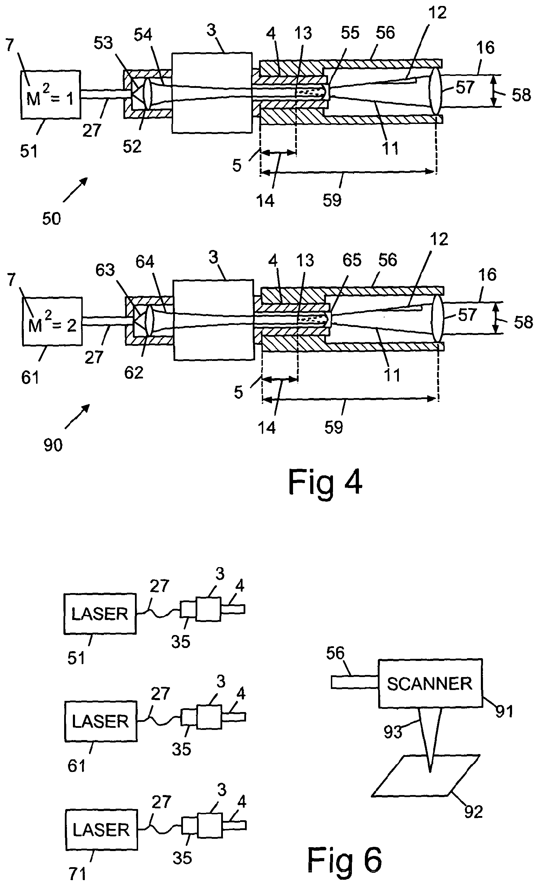

Figure 4 shows laser systems 50, 90 respectively comprising two lasers 51, 61 having different beam qualities 7. The lasers 51, 61 are connected to the optical isolator 3 by the fibre cable 27. The input beams 53, 63 are conditioned by input lens 52, 62 which are selected to optimize the isolation of the light beams 54, 64 through the isolator 3. Each of the isolators 3 have a first lens arrangement 55, 65 to provide the light beam 11 having the same pre-determined divergence 12. Since the beam quality of the lasers 51, 61 are different from each other, the first lens arrangements 55, 65 are also likely to comprise different lenses. A collimator 56 is attached to each of the isolators 3 to provide the collimated beam 16 having the same pre-determined diameter 58. The collimator 56 comprises a second lens arrangement 57 a distance 59 from the reference plane 5.

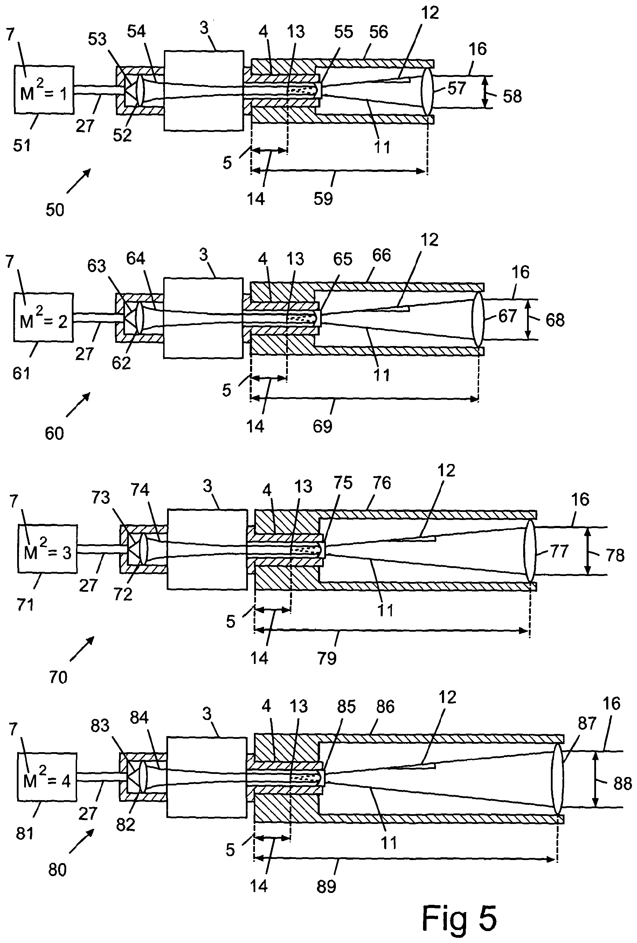

Figure 5 shows laser systems 50, 60, 70 and 80 respectively comprising a plurality of lasers 51, 61, 71, 81. The plurality of lasers 51, 61, 71, 81 have different beam qualities 7. Each laser 51, 61, 71, 81 is configured to emit respective light beams 53, 63, 73, 83 defined by different beam qualities 7. The input lenses 52, 62, 72, 82 are selected based on the different beam qualities 7 to optimize the light path through the isolators 3.

Each laser system 50, 60, 70, 80 comprises the optical isolator 3, the output connector 4, the reference plane 5, and the first lens arrangements 55, 65, 75, 85. For each laser system 50, 60, 70, 80, the optical isolator 3 is configured to isolate the light beams 54, 64, 74, 84. The output connectors 4 are located at the outputs of each of the optical isolators 3. The first lens arrangements 55, 65, 75, 85 are located proximal to the distal ends 10 (shown with reference to Figure 1) of the respective output connectors 4. The output connector 4 is configured to connect to a collimator 56, 66, 76, 86. The collimators 56, 66, 76, 86 are such that they can be mechanically referenced to the reference plane 5.

The first lens arrangements 55, 65, 75, 85 are selected based on the beam qualities 7 of the light beams 53, 63, 73, 83 to provide the output light beams 11 which have the same pre-determined divergence 12. The first lens arrangements 55, 65, 75, 85 are positioned to provide the beam waists 13 at the pre-determined distance 14 from the reference plane 5. The pre-determined divergence 12 is the same for each of the laser systems 50, 60, 70, 80. Consequently, interchangeable collimators 56, 66, 76, 86 can be fitted to the laser systems 50, 60, 70, 80 in order to provide pre-determined beam diameters 58, 68, 78, 88. The interchangeable collimator 56 will output substantially the same pre-determined beam diameter 58 when fitted to any one of the laser systems 50, 60, 70 and 80. Similarly, the interchangeable collimators 66, 76, 86 will respectively output substantially the same pre-determined beam diameters 68, 78, 88 when fitted to any one of the laser systems 50, 60, 70 and 80.

As a consequence of the light beams 53, 63, 73, 83 having different beam qualities 7, different input lens arrangements 52, 62, 72, 82 are required to optimize the light beams 54, 64, 74, 84 through the isolator 3 as described above with reference to Figure 1. The input lens arrangements 52, 62, 72, 82 can comprise a lens as shown, or a self focusing lens.

Preferably the isolator 3 is fibre coupled at its input with the fibre cable 27. Different fibre cables 27 may be selected for receiving light having different beam qualities 7. A fibre coupled isolator is particularly advantageous because the isolator system comprising the fibre cable 27, the input lens 52, 62, 72, 82, the output connector 4, and the first lens arrangements 55, 65, 75, 85 can be manufactured with high precision, and can then be coupled to the laser 51, 61, 71, 81, by for example, fusion splicing. The fibre cable 27 can degrade beam quality, and thus care is necessary in its selection so as to provide the light beam 53, 63 ,73, 83 of the required beam quality 7 at its output.

The first lens arrangements 55, 65, 75, 85 preferably comprise a negative lens, and the beam waist 13 is preferably a virtual beam waist as shown. The negative lens and the virtual beam waist are useful design features for laser peak powers greater than approximately 1kW because it avoids high optical intensity beam waists obtained with a positive lens. Such high optical intensities can cause beam instabilities and ionization of the air.

The collimators 56, 66, 76, 86 comprise a second lens arrangement 57, 67, 77, 87 for converting the light beam 1 1 having the pre-determined divergence 12 to the collimated beam 16 having the pre-determined beam diameter 58, 68, 78, 88. Each of the collimators 56, 66, 76, 86 are characterized by a different distance 59, 69, 79, 89 between the second lens arrangement 57, 67, 77, 87 and the beam waist 13 when connected to the output connector 4 of one of the laser systems 50, 60, 70, 80. Consequently, each of the collimators 56, 66, 76, 86 emits a collimated beam 16 having different pre-determined beam diameters 58, 68, 78, 88. Advantageously, the collimators 56, 66, 76, 86 are interchangeable between the laser systems 50, 60, 70, 80. The pre-determined beam diameter 58, 68, 78, 88 is the same for each of the laser systems 50, 60, 70, 80 when the light beam 11 is collimated by the same collimator 56, 66, 76 or 86 irrespective of which of the laser systems 50, 60, 70, 80 the collimators 56, 66, 76, 86 are attached to.

Referring to Figures 1, 4 and 5, the first lens arrangements 6, 55, 65, 75, 85 may be such that the pre-determined divergence 12 is between 50 mrad and 200 mrad. The pre-determined divergence 12 is preferably between approximately 90 mrad and 125 mrad.

Referring to Figures 1, 4 and 5, the first lens arrangements 6, 55, 65, 75, 85 are preferably separated from the isolator 3 by a distance 36 (shown with reference to Figure 1) of at least 20mm. This is to improve tolerance to back reflections that may occur from surfaces of materials that are being laser processed.

Referring to Figures 1, 4 and 5, the laser systems 10, 51, 61, 71, 81 can comprise fibre lasers, disk lasers or rod lasers.

Referring to Figures 4 and 5, the laser systems 50, 60, 70, 80, 90 may be provided with or without the interchangeable collimators 56, 66, 76, 86 which may be sourced separately from a different supplier.

The apparatus of the present invention may be manufactured and sold with a plurality of isolators 3 comprising the laser systems 50, 60, 70, 80, 90 shown in Figures 4 and 5 with or without the lasers 51, 61, 71, 81. The family of isolators 3 or single isolator 3 is preferably fibre coupled with the fibre cable 27. The isolators 3 can be provided with or without the interchangeable collimators 56, 66, 76, 86 which may be sourced separately from a different supplier.

The apparatus of the present invention is useful for beam qualities 7 defined by an $M^2$ between approximately 1 and 25, and more preferable for beam qualities 7 defined by an $M^2$ less than 10.

Advantageously, the apparatus of the invention may include the collimator 9, 56, 66, 76 or 86 attached to, or forming part of, a laser processing apparatus 91 as shown in Figure 6. The laser processing apparatus 91 is depicted as a scanner for scanning and focusing a light beam 93 onto a material 92 to be laser processed. By laser processing, it is meant processes such as for example marking, engraving, cutting, drilling, scribing, brazing, cladding, and welding. Different lasers 51, 61, 71 can be connected to the collimator 56 via the isolator 3 and output connectors 4, thus enabling the apparatus to be a laser processing apparatus 91 with interchangeable lasers 51, 61, 71. As indicated above, prior art systems either use larger beams and expensive isolators, or use collimated lasers that output a collimated light beam. The collimated light beam would then be expanded using a beam expanding telescope to interface properly to the appropriate scanner.

For size and cost benefits, and with reference to Figures 1, 4, 5 and 6, the optical isolator 3 is preferably one that is too small to operate with a collimated light beam through it. Preferably, the optical isolator 3 is one in which the light beam 2 is focused through the optical isolator 3. In a comparative example, the beam diameter 19 (shown with reference to Figure 1) is preferably less than 1 mm, in the preferred embodiment, it is less than 0.5mm. A light beam 2 having such a small beam diameter will diverge as it emerges from the optical isolator 3; the light beam 2 is not collimated in the isolator 3.

The cost benefits of the invention described with reference to Figures 1 to 6 are therefore considerable. They include: (i) the ability to use smaller isolators 3 that are lower cost as a result of using smaller internal crystals compared to larger isolators; (ii) less accessories (such as collimators and beam expanding telescopes) required because of the provision of the output beam 11 having the pre-determined divergence 12; and (iii) the ability to integrate the collimator 56 with the laser processing apparatus 91 and have detachable and interchangeable lasers. It is to be appreciated that the embodiments of the invention described above with reference to the accompanying drawings have been given by way of example only and that modifications and additional components may be provided to enhance performance. Individual components shown in the drawings are not limited to use in their drawings. The scope of the invention is defined in the appended claims.

## Claims

1. Apparatus for optically isolating a light beam (2) from a laser (28), which light beam (2) has an average power greater than 1 W and a pre-determined beam quality (7) defined by an $M^2$ value between 1 and 25, and which apparatus comprises an optical input (1) for the light beam (2), an input lens (25), an optical isolator (3), an output connector (4), a reference plane (5), and a first lens arrangement (6), wherein:

   • the optical isolator (3) is selected to isolate the light beam (2);
   • the input lens (25) is positioned between the optical input (1) and the optical isolator (3), and is arranged to focus the light beam (2) through the optical isolator (3) to the output connector (4) such that the beam diameter (19) of the light beam (2) varies by more than five percent within the optical isolator (3);
   • the first lens arrangement (6) is positioned to receive the light beam (2) from the optical isolator (3);
   • the optical isolator (3) is a polarization insensitive isolator;
   • the apparatus is configured such that the light beam (2) is not collimated in the optical isolator (3);

EP 2 710 420 B1

• the input lens (25) is selected based upon the pre-determined beam quality (7);
• the input lens (25) is configured to focus the light beam to a light beam diameter (19) within the optical isolator (3) of less than 0.5mm;
• the output connector (4) is formed with a connector interface (37) configured such to be connectable to a collimator (9) which is capable of being referenced to the reference plane (5);
• the first lens arrangement (6) is selected based upon the pre-determined beam quality (7) of the light beam (2) and is configured to provide an output light beam (11) having a pre-determined divergence (12) that is independent of the beam quality (7);
• the first lens arrangement (6) is positioned to form a beam waist (13) at a pre-determined distance (14) from the reference plane (5); and
• the connector interface (37), the pre-determined divergence (12) that is independent of the beam quality (7), and the pre-determined distance (14) allow a family of collimators (9) to be used in the apparatus, each collimator (9) providing a different pre-determined beam diameter (17) that is independent of the beam quality (7) when the collimator (9) is fitted to the output connector (4).

2. Apparatus according to claim 1 wherein the first lens arrangement (6) is a negative lens.

3. Apparatus according to any one of the preceding claims wherein the first lens arrangement (6) is defined by a focal length, and the beam waist (13) is separated from the first lens arrangement (6) by a distance equal to the focal length.

4. Apparatus according to any one of the preceding claims and including the collimator (9) comprising a second lens arrangement (15) for converting the output light beam (11) having the pre-determined divergence (12) to a collimated beam (16) having a pre-determined beam diameter (17), the apparatus being such that when the collimator (9) is attached to the output connector (4) and mechanically referenced to the reference plane (5), the pre-determined beam diameter (17) is independent of the beam quality (7) of the output light beam (11).

5. Apparatus according to any one of the preceding claims and including the laser (28) and an optical fibre cable (27), the laser being connected to the optical input (1) via the optical fibre cable (27).

6. Apparatus according to claim 5 wherein the laser (28) is **characterized by** a peak power intensity greater than 1kW, and the laser (28) is selected from the group comprising a fibre laser, a disk laser, and a rod laser.

7. Apparatus according to any one of the preceding claims, wherein the pre-determined divergence (12) is between 50 mrad and 200 mrad, in particular between 90 mrad and 125 mrad.

8. Apparatus according to any one of the preceding claims wherein the first lens arrangement (6) is separated from the optical isolator (3) by a distance of at least 20mm.

9. A method for optically isolating a light beam (2) from a laser (28), which method comprises:

• providing an optical input (1) for the light beam (2);
• selecting an optical isolator (3) to isolate the light beam (2), which light beam (2) has an average power greater than 1W and a pre-determined beam quality (7) defined by an $M^2$ value;
• providing an input lens (25);
• providing an output connector (4);
• using the input lens (25) to focus the light beam (2) through the optical isolator (3) to the output connector (4) such that the beam diameter (19) varies by more than five percent within the optical isolator (3); and positioning a first lens arrangement (6) to receive the light beam (2) from the optical isolator (3);

the method further comprising:

• the $M^2$ value is between 1 and 25;
• the optical isolator (3) is a polarization insensitive isolator;
• the light beam (2) is not collimated in the optical isolator (3);
• the input lens (25) is selected based upon the pre-determined beam quality (7);
• the step of focussing the light beam (2) with the input lens (25) provides a light beam diameter (19) within the optical isolator (3) of less than 0.5mm;
• the output connector (4) is formed with a connector interface (37) configured such to be connectable to a collimator (9) which is capable of being referenced to the reference plane (5);
• the first lens arrangement (6) is selected based upon the pre-determined beam quality (7) of the light beam (2) and is configured to provide an output light beam (11) having a pre-determined divergence (12) that is independent of the beam quality (7);
• the first lens arrangement (6) is positioned to form a beam waist (13) at a pre-determined distance (14) from the reference plane (5); and
• the connector interface (37), the pre-determined divergence (12) that is independent of the beam quality (7), and the pre-determined distance (14) allow a family of collimators (9) to be used in the method, each collimator (9) providing a different pre-determined beam diameter (17) that is independent of the beam quality (7) when the collimator (9) is fitted to the output connector (4).

10. A method according to claim 9 wherein the first lens arrangement (6) is a negative lens.

11. A method according to claim 9 or claim 10 and including the steps of providing the laser (28) and an optical fibre cable (27), and connecting the laser (28) to the optical input (1) with the optical fibre cable (27).

12. A method according to any one of claims 9 to 11 including the step of providing the collimator (9).

13. A method according to any one of claims 9 to 12 wherein the laser (28) is selected to have a peak power intensity greater than 1kW, and the laser (28) is selected from the group comprising a fibre laser, a disk laser, and a rod laser.

**Patentansprüche**

1. Vorrichtung zur optischen Isolierung eines Lichtbündels (2) aus einem Laser (28), wobei das Lichtbündel (2) eine durchschnittliche Leistung von mehr als 1W und eine vorgegebene Strahlenqualität (7), definiert durch einen $M^2$-Wert zwischen 1 und 25, hat und die Vorrichtung einen optischen Eingang (1) für das Lichtbündel (2), eine Eingangslinse (25), einen optischen Isolator (3), einen Ausgangssteckverbinder (4), eine Bezugsebene (5) und eine erste Linsenanordnung (6) umfasst, wobei

- der optische Isolator (3) dafür ausgewählt ist, dass er das Lichtbündel (2) isoliert,
- sich die Eingangslinse (25) zwischen dem optischen Eingang (1) und dem optischen Isolator (3) befindet und so angeordnet ist, dass sie das Lichtbündel (2) durch den optischen Isolator (3) auf den Ausgangssteckverbinder (4) fokussiert, so dass der Bündeldurchmesser (19) des Lichtbündels (2) innerhalb des optischen Isolators (3) um mehr als fünf Prozent variiert,
- die erste Linsenanordnung (6) so positioniert ist, dass sie das Lichtbündel (2) vom optischen Isolator (3) empfängt,
- der optische Isolator (3) ein polarisationsunempfindlicher Isolator ist,
- die Vorrichtung so ausgelegt ist, dass das Lichtbündel (2) im optischen Isolator (3) nicht kollimiert ist,
- die Eingangslinse (25) auf der Basis der vorgegebenen Strahlenqualität (7) ausgewählt ist,
- die Eingangslinse (25) so ausgelegt ist, dass sie das Lichtbündel innerhalb des optischen Isolators (3) auf einen Bündeldurchmesser (19) von kleiner als 0,5 mm fokussiert,
- der Ausgangssteckverbinder (4) mit einer Steckerkontaktfläche (37) ausgebildet ist, welche mit einem Kollimator (9) verbindbar ist, der sich auf die Bezugsebene (5) beziehen lässt,
- die erste Linsenanordnung (6) auf der Basis der vorgegebenen Strahlenqualität (7) des Lichtbündels (2) ausgewählt und so ausgelegt ist, dass sie ein Ausgangslichtbündel (11) mit einer von der Strahlenqualität (7) unabhängigen vorgegebenen Divergenz (12) liefert,
- die erste Linsenanordnung (6) so positioniert ist, dass sie in einem vorgegebenen Abstand (14) von der Bezugsebene (5) eine Strahltaille (13) bildet, und
- die Steckerkontaktfläche (37), die von der Strahlenqualität (7) unabhängige vorgegebene Divergenz (12) und der vorgegebene Abstand (14) es ermöglichen, dass in der Vorrichtung eine Familie von Kollimatoren (9) verwendet wird, wobei jeder Kollimator (9) einen anderen von der Strahlenqualität (7) unabhängigen vorgegebenen Bündeldurchmesser (17) liefert, wenn der Kollimator (9) auf den Ausgangssteckverbinder (4) aufgesteckt wird.

2. Vorrichtung nach Anspruch 1, wobei die erste Linsenanordnung (6) eine Negativlinse ist

3. Vorrichtung nach einem der vorgenannten Ansprüche, wobei die erste Linsenanordnung (6) durch eine Brennweite definiert und die Strahltaille (13) von der ersten Linsenanordnung (6) durch einen der Brennweite gleichen Abstand getrennt ist.

4. Vorrichtung nach einem der vorgenannten Ansprüche einschließlich des Kollimators (9), welcher eine zweite Linsenanordnung (15) zur Umwandlung des Ausgangslichtbündels (11) mit der vorgegebenen Divergenz (12) in ein Parallel-Lichtbündel (16) mit einem vorgegebenen Bündeldurchmesser (17) umfasst, wobei die Vorrichtung so ausgelegt ist, dass, wenn der Kollimator (9) am Ausgangssteckverbinder (4) angesetzt und mechanisch auf die Referenzebene (5) bezogen ist, der vorgegebene Bündeldurchmesser (17) von der Strahlenqualität (7) des Ausgangslichtbündels (11) unabhängig ist.

5. Vorrichtung nach einem der vorgenannten Ansprüche, einschließlich des Lasers (28) und eines Faseroptikkabels (27), wobei der Laser mit dem optischen Eingang (1) über das Faseroptikkabel (27) verbunden ist.

6. Vorrichtung nach Anspruch 5, wobei der Laser (28) durch eine Maximalleistung größer als 1 kW gekennzeichnet ist und aus einer Gruppe, umfassend einen Faserlaser, einen Scheibenlaser und einen Stablaser, ausgewählt wird.

7. Vorrichtung nach einem der vorgenannten Ansprüche, wobei die vorgegebene Divergenz (12) zwischen 50 mrad und 200 mrad, besonders zwischen 90 mrad und 125 mrad beträgt.

8. Vorrichtung nach einem der vorgenannten Ansprüche, wobei die erste Linsenanordnung (6) vom optischen Isolator (3) durch einen Abstand von mindestens 20 mm getrennt ist.

9. Verfahren zur optischen Isolierung eines Lichtbündels (2) aus einem Laser (28), wobei das Verfahren Folgendes umfasst:

- Bereitstellen eines optischen Eingangs (1) für das Lichtbündel (2),
- Auswählen eines optischen Isolators (3) zur Isolierung des Lichtbündels (2), wobei das Lichtbündel (2) eine durchschnittliche Leistung größer als 1 W und eine durch einen $M^2$-Wert definierte vorgegebene Strahlenqualität (7) hat,
- Bereitstellen einer Eingangslinse (25),
- Bereitstellen eines Ausgangssteckverbinders (4),
- Verwenden der Eingangslinse (25) zum Fokussieren des Lichtbündels (2) durch den optischen Isolator (3) auf den Ausgangssteckverbinder (4), so dass der Bündeldurchmeser (19) innerhalb des optischen Isolators (3) um mehr als fünf Prozent variiert, und
- Positionieren einer ersten Linsenanordnung (6) derart, dass sie das Lichtbündel (2) vom optischen Isolator (3) empfängt
- wobei das Verfahren außerdem Folgendes umfasst:

  - der $M^2$-Wert liegt zwischen 1 und 25,
  - der optische Isolator (3) ist ein polarisationsunempfindlicher Isolator,
  - das Lichtbündel (2) ist im optischen Isolator (3) nicht kollimiert,
  - die Eingangslinse (25) ist auf der Basis der vorgegebenen Strahlenqualität (7) ausgewählt,
  - der Schritt des Fokussierens des Lichtbündels (2) mit der Eingangslinse (25) liefert innerhalb des optischen Isolators (3) einen Lichtbündeldurchmesser (19) von kleiner als 0,5 mm,
  - der Ausgangssteckverbinder (4) ist mit einer Steckerkontaktfläche (37) ausgebildet, welche mit einem Kollimator (9) verbindbar ist, der sich auf die Bezugsebene (5) beziehen lässt,
  - die erste Linsenanordnung (6) ist auf der Basis der vorgegebenen Strahlenqualität (7) des Lichtbündels (2) ausgewählt und so ausgelegt, dass sie ein Ausgangslichtbündel (11) mit einer von der Strahlenqualität (7) unabhängigen vorgegebenen Divergenz (12) liefert,
  - die erste Linsenanordnung (6) ist so positioniert, dass sie in einem vorgegebenen Abstand (14) von der Bezugsebene (5) eine Strahltaille (13) bildet, und
  - die Steckerkontaktfläche (37), die von der Strahlenqualität (7) unabhängige vorgegebene Divergenz (12) und der vorgegebene Abstand (14) ermöglichen es, dass für das Verfahren eine Familie von Kollimatoren (9) verwendbar wird, wobei jeder Kollimator (9) einen anderen von der Strahlenqualität (7) unabhängigen vorgegebenen Bündeldurchmesser (17) liefert, wenn der Kollimator (9) auf den Ausgangssteckverbinder (4) aufgesteckt wird.

10. Verfahren nach Anspruch 9, wobei die erste Linsenanordnung (6) eine Negativlinse ist.

**11.** Verfahren nach Anspruch 9 oder 10, einschließlich der Schritte der Bereitstellung des Lasers (28) und eines Faseroptikkabels (27) und der Verbindung des Lasers (28) mit dem optischen Eingang (1) über das Faseroptikkabel (27).

**12.** Verfahren nach einem der Ansprüche 9 bis 11, einschließlich des Schrittes der Bereitstellung des Kollimators (9)

**13.** Verfahren nach einem der Ansprüche 9 bis 12, wobei der ausgewählte Laser (28) eine Maximalleistung größer als 1 kW hat und aus einer Gruppe, umfassend einen Faserlaser, einen Scheibenlaser und einen Stablaser, ausgewählt wird.

**Revendications**

**1.** Appareil destiné à isoler optiquement un faisceau lumineux (2) provenant d'un laser (28), lequel faisceau lumineux (2) a une puissance moyenne supérieure à 1 W et une qualité de faisceau prédéterminée (7) définie par une valeur $M^2$ entre 1 et 25, et lequel appareil comprend une entrée optique (1) pour le faisceau lumineux (2), une lentille d'entrée (25), un isolateur optique (3), un connecteur de sortie (4), un plan de référence (5), et un premier agencement de lentilles (6), dans lequel :

  • l'isolateur optique (3) est sélectionné pour isoler le faisceau lumineux (2) ;
  • la lentille d'entrée (25) est positionnée entre l'entrée optique (1) et l'isolateur optique (3), et est agencée pour focaliser le faisceau lumineux (2) à travers l'isolateur optique (3) jusqu'au connecteur de sortie (4) de telle sorte que le diamètre de faisceau (19) du faisceau lumineux (2) varie de plus de cinq pour cent à l'intérieur de l'isolateur optique (3) ;
  • le premier agencement de lentilles (6) est positionné pour recevoir le faisceau lumineux (2) provenant de l'isolateur optique (3) ;
  • l'isolateur optique (3) est un isolateur insensible à la polarisation ;
  • l'appareil est configuré de telle sorte que le faisceau lumineux (2) n'est pas collimaté dans l'isolateur optique (3) ;
  • la lentille d'entrée (25) est sélectionnée en fonction de la qualité de faisceau prédéterminée (7) ;
  • la lentille d'entrée (25) est configurée pour focaliser le faisceau lumineux jusqu'à un diamètre de faisceau lumineux (19) à l'intérieur de l'isolateur optique (3) de moins de 0,5 mm ;
  • le connecteur de sortie (4) est formé avec une interface de connecteur (37) configurée de manière à être raccordable à un collimateur (9) qui peut être rattaché au plan de référence (5) ;
  • le premier agencement de lentilles (6) est sélectionné en fonction de la qualité de faisceau prédéterminée (7) du faisceau lumineux (2) et est configuré pour délivrer un faisceau lumineux de sortie (11) ayant une divergence prédéterminée (12) qui est indépendante de la qualité de faisceau (7) ;
  • le premier agencement de lentilles (6) est positionné pour former un ventre de faisceau (13) à une distance prédéterminée (14) du plan de référence (5) ; et
  • l'interface de connecteur (37), la divergence prédéterminée (12) qui est indépendante de la qualité de faisceau (7), et la distance prédéterminée (14) permettent d'utiliser une famille de collimateurs (9) dans l'appareil, chaque collimateur (9) fournissant un diamètre de faisceau prédéterminé différent (17) qui est indépendant de la qualité de faisceau (7) quand le collimateur (9) est installé sur le connecteur de sortie (4) .

**2.** Appareil selon la revendication 1 dans lequel le premier agencement de lentilles (6) est une lentille négative.

**3.** Appareil selon l'une quelconque des revendications précédentes dans lequel le premier agencement de lentilles (6) est défini par une distance focale, et le ventre de faisceau (13) est séparé du premier agencement de lentilles (6) par une distance égale à la distance focale.

**4.** Appareil selon l'une quelconque des revendications précédentes et comportant le collimateur (9) comprenant un deuxième agencement de lentilles (15) destiné à transformer le faisceau lumineux de sortie (11) ayant la divergence prédéterminée (12) en un faisceau collimaté (16) ayant un diamètre de faisceau prédéterminé (17), l'appareil étant tel que lorsque le collimateur (9) est attaché au connecteur de sortie (4) et rattaché mécaniquement au plan de référence (5), le diamètre de faisceau prédéterminé (17) est indépendant de la qualité de faisceau (7) du faisceau lumineux de sortie (11).

**5.** Appareil selon l'une quelconque des revendications précédentes et comportant le laser (28) et un câble à fibre optique (27), le laser étant raccordé à l'entrée optique (1) par le biais du câble à fibre optique (27).

**6.** Appareil selon la revendication 5 dans lequel le laser (28) est **caractérisé par** une intensité de puissance maximale supérieure à 1 kW, et le laser (28) est sélectionné dans le groupe comprenant un laser à fibre, un laser à disque, et à laser à barreau.

**7.** Appareil selon l'une quelconque des revendications précédentes, dans lequel la divergence prédéterminée (12) se situe entre 50 mrad et 200 mrad, en particulier entre 90 mrad et 125 mrad.

**8.** Appareil selon l'une quelconque des revendications précédentes dans lequel le premier agencement de lentilles (6) est séparé de l'isolateur optique (3) par une distance d'au moins 20 mm.

**9.** Procédé d'isolement optique d'un faisceau lumineux (2) provenant d'un laser (28), lequel procédé comprend

- l'obtention d'une entrée optique (1) pour le faisceau lumineux (2) ;
- la sélection d'un isolateur optique (3) pour isoler le faisceau lumineux (2), lequel faisceau lumineux (2) a une puissance moyenne supérieure à 1 W et une qualité de faisceau prédéterminée (7) définie par une valeur $M^2$ ;
- l'obtention d'une lentille d'entrée (25) ;
- l'obtention d'un connecteur de sortie (4) ;
- l'utilisation de la lentille d'entrée (25) pour focaliser le faisceau lumineux (2) à travers l'isolateur optique (3) jusqu'au connecteur de sortie (4) de telle sorte que le diamètre de faisceau (19) varie de plus de cinq pour cent à l'intérieur de l'isolateur optique (3) ; et le positionnement d'un premier agencement de lentilles (6) pour recevoir le faisceau lumineux (2) provenant de l'isolateur optique (3) ;

le procédé comprenant en outre :

- la valeur $M^2$ se situe entre 1 et 25 ;
- l'isolateur optique (3) est un isolateur insensible à la polarisation ;
- le faisceau lumineux (2) n'est pas collimaté dans l'isolateur optique (3) ;
- la lentille d'entrée (25) est sélectionnée en fonction de la qualité de faisceau prédéterminée (7) ;
- l'étape de focalisation du faisceau lumineux (2) avec la lentille d'entrée (25) fournit un diamètre de faisceau lumineux (19) à l'intérieur de l'isolateur optique (3) de moins de 0,5 mm ;
- le connecteur de sortie (4) est formé avec une interface de connecteur (37) configurée de manière à être raccordable à un collimateur (9) qui peut être rattaché au plan de référence (5) ;
- le premier agencement de lentilles (6) est sélectionné en fonction de la qualité de faisceau prédéterminée (7) du faisceau lumineux (2) et est configuré pour délivrer un faisceau lumineux de sortie (11) ayant une divergence prédéterminée (12) qui est indépendante de la qualité de faisceau (7) ;
- le premier agencement de lentilles (6) est positionné pour former un ventre de faisceau (13) à une distance prédéterminée (14) du plan de référence (5) ; et
- l'interface de connecteur (37), la divergence prédéterminée (12) qui est indépendante de la qualité de faisceau (7), et la distance prédéterminée (14) permettent d'utiliser une famille de collimateurs (9) dans le procédé, chaque collimateur (9) fournissant un diamètre de faisceau prédéterminé différent (17) qui est indépendant de la qualité de faisceau (7) quand le collimateur (9) est installé sur le connecteur de sortie (4) .

**10.** Procédé selon la revendication 9 dans lequel le premier agencement de lentilles (6) est une lentille négative.

**11.** Procédé selon la revendication 9 ou la revendication 10 et comportant les étapes d'obtention du laser (28) et d'un câble à fibre optique (27), et de raccordement du laser (28) à l'entrée optique (1) avec le câble à fibre optique (27).

**12.** Procédé selon l'une quelconque des revendications 9 à 11 comportant l'étape d'obtention du collimateur (9).

**13.** Procédé selon l'une quelconque des revendications 9 à 12 dans lequel le laser (28) est sélectionné pour avoir une intensité de puissance maximale supérieure à 1 kW, et le laser (28) est sélectionné dans le groupe comprenant un laser à fibre, un laser à disque, et un laser à barreau.

Fig 1

Fig 2

Fig 3

Fig 4

Fig 6

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050105870 A1